Europäisches Patentamt

European Patent Office

Office européen des brevets

(11) Publication number: **0 046 000**
**B1**

(12) **EUROPEAN PATENT SPECIFICATION**

(45) Date of publication of patent specification: **14.11.90**

(21) Application number: **81200909.0**

(22) Date of filing: **27.03.79**

(60) Publication number of the earlier application in accordance with Art. 76 EPC: **0 004 738**

(51) Int. Cl.⁵: **G 11 B 3/60, G 11 B 17/02**

(54) **Video disc support assembly.**

(30) Priority: **27.03.78 US 890770**

(43) Date of publication of application:
**17.02.82 Bulletin 82/07**

(45) Publication of the grant of the patent:
**14.11.90 Bulletin 90/46**

(84) Designated Contracting States:
**BE CH DE FR GB IT NL SE**

(56) References cited:
**DE-B-1 172 310**
**DE-B-2 330 818**
**DE-U-7 323 419**
**FR-A-2 278 128**
**FR-A-2 363 161**
**GB-A-1 482 268**
**US-A-4 022 478**

(73) Proprietor: **DISCOVISION ASSOCIATES**
**P.O. Box 6600 3300 Hyland Avenue**
**Costa Mesa California 92626 (US)**

(72) Inventor: **Elliott, James E.**
**1741, Perch Street**
**San Pedro California (US)**

(74) Representative: **Needle, Jacqueline et al**
**W.H. BECK, GREENER & CO 7 Stone Buildings**
**Lincoln's Inn**
**London WC2A 3SZ (GB)**

Courier Press, Leamington Spa, England.

EP 0 046 000 B1

## Description

This invention relates to a video disc support assembly and is divided from European Patent Application No. 79300487.0 published on the 17th October, 1979.

That specification describes and claims a video disc player unit, and the present invention relates to the motor and spindle assembly for driving a video disc in that unit, and one object of the invention is to provide a particularly convenient and efficient design of motor and spindle assembly for rotating the video disc.

FR—A—2 363 161 discloses an information disc support assembly comprising a motor and a spindle for driving a disc, said spindle having a central axis, a disc support means positioned about said central axis and having a generally flat annular surface extending perpendicular to said central axis and spaced from said spindle for supporting said disc, a central recess provided in said support means; and a centering member mounted on said spindle and received in said central recess provided in said support means, said centering member having an outer surface generally forming a frustum of a cone which is arranged for engaging a central aperture provided in said disc and centering said disc with respect to the central axis of said spindle, and resilient biassing means for enabling the relative axial position of said centering means and said support means to be adjusted, and further comprising a releasable clamping means arranged to engage the side of a disc opposite from the side engaged on said generally flat annular surface.

This known device has the problem that the axial position of the centered disc can vary in dependence upon the size of the disc aperture. This complicates focussing particularly as the lenses typically employed with such devices have a short depth of field.

An information disc support assembly according to the present invention is characterised in that said disc support means is connected to said spindle to be rotated thereby, in that said generally flat annular surface defines a support plane for said disc which extends at a fixed axial location relative to said central axis, in that said centering member is axially slidable relative to said spindle and to said support means, and in that said biassing means are arranged to bias said centering member out of said support means such that, prior to the engagement of a disc on said centering member, said outer surface of said centering member projects beyond said support plane.

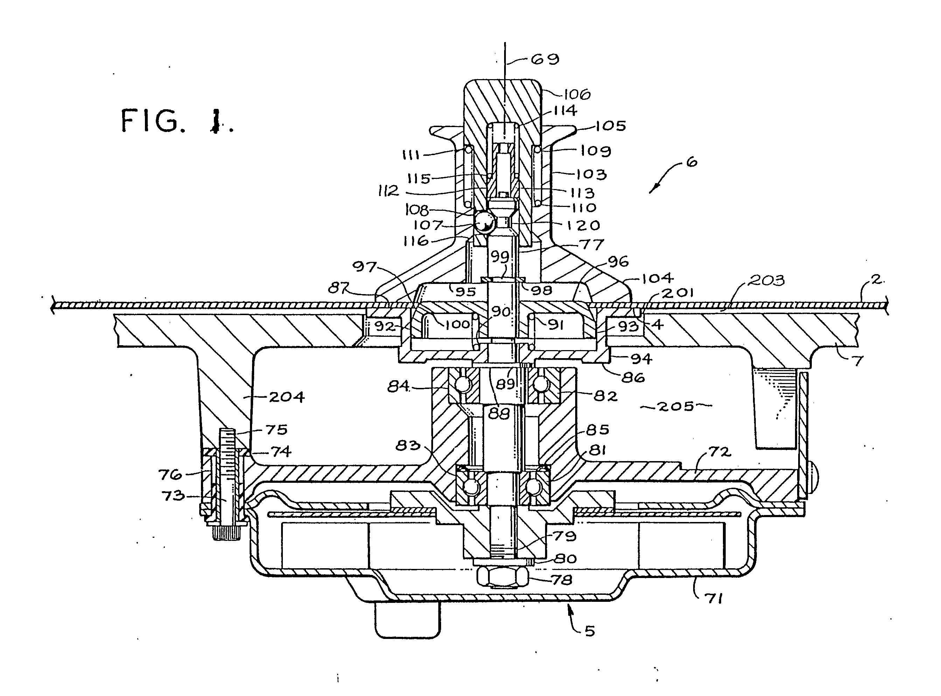

The invention may be carried into practice in various ways, and one embodiment will now be described by way of example, with reference to the accompaying drawings of which the single figure (which corresponds with Figure 4 in European Patent Specification No. 79300487.0 from which this application was divided) is a horizontal section through a motor and spindle assembly and video disc centering arrangement.

The disc centering and driving arrangement shown in the figure is a component of a complete video disc player fully described in the above European Patent Application, the publication of which was mentioned in the European Patent Bulletin under the Publication No. 4738 on the 17th October, 1979.

A video disc 2 is rotated about its centre at high speed by a spindle and motor assembly 5. A clamp assembly 6 retains said video disc 2 about the central axis of the spindle and motor assembly 5 and parallel to a stationary platform hence forth referred to as a stabilisation plate 7.

The video disc player unit includes a means of accurately translating the spindle and motor assembly 5 and the attached video disc 2 radially beneath an optical bridge provided with a light source and optical path, and maintained vertically above the rotating video disc 2.

The accurate translation of the spindle and motor assembly 5 and the attached video disc 2 beneath the optical bridge is provided by a carriage having a locator bearing assembly and a support follower bearing assembly.

The stabilisation plate 7 is supplied with a number of structural ribs greatly enhancing the structural integrity without appreciably increasing the mass of said stabilisation plate 7. The stabilisation plate 7 is rigidly attached to the carriage by means of a number of adjustable retaining screws. Due to this rigid attachment the stabilisation plate 7 moves in conjunction with the carriage. The maintaining of a low mass stabilisation plate allows for fast forward at reverse speeds that might be utilised in a reject or search mode. The low mass carriage and stabilisation plate assembly allow for the use of a low energy capstan drive for the carriage since the low mass assembly is incapable of storing as much inertia as an assembly utilising a solid stabilisation plate.

The figure shows in detail the construction of the spindle and motor assembly 5, the clamp assembly 6 and the stabilisation plate 7.

A pancake type motor 71 for rotating the video disc 2 is retained by screws 73 which pass through apertures 76 in a motor mount 72 and threaded holes 75 in a rim 204 depending from the stabilisation plate 7. The motor mount 72 is vibrationally isolated from the remainder of the spindle assembly by means of dead rubber washers 74.

The spindle 77 is connected to the motor 71 by means of a nut 78 on the threaded lower portion 79 of the spindle 77 on a washer 80.

The spindle 77 rotates in ball bearing 81 and 82, of which the lower is a press fit in a recess 83 while the upper is a press fit in a recess 84. The lower bearing 81 is further provided with a thrust washer 85 for limiting the amount of vertical motion of the spindle 77.

The spindle 77 has a video disc support ring 86 arranged about the central axis 69 of the spindle 77 and having an upper plane 87 arranged in a critical perpendicularly to the central axis 69 and directly adjacent to the plane of the lower surface of the video disc 2. Said video disc support ring 86 has a lower plane 88 in intimate contact with an upper plane 89 of the upper bearing 82 and is provided with a lip 90 for the positioning of a compression spring 91.

A centering device 92 arranged in critical perpendicularity to the central axis of the spindle 77 has a substantially conical shape and is positioned in a recess 93 defined within an upstanding rim 94 on the support ring 86. The centering device 92 which has a first position 95 and a second position 96, cooperates with the central hole 97 in the video disc 2 and the clamp assembly 6 in providing an accurate means of locating the disc in relation to the axis 69.

In order to place a video disc 2 on a video disc player unit 1, the clamp assembly is removed from the spindle 77. This will be described in detail further on. The video disc 2 is placed on the spindle and motor assembly 5 with the lower surface of the disc on the upper face 87 of the support ring 86. The central hole 97 in the disc 2 contacts the centering device 92 at a point 100. The centering device 92 is in its upper position 95 in which it is held by a spring 91 against a stop ring 98 in a groove 99 in the spindle 77. The conical shape of the centering device 92 allow a wide variation in the radius of the central hole in disc. The clamp assembly 6 is replaced on the spindle 77, and engages the disc 2, and, with the clamp assembly in its restrained position, the disc 2 is firmly held between the video disc support ring 86 and the clamp assembly 6, allowing the disc to rest at a point of contact on the conical surface of the centering device 92 individually defined by the radius of the hole in the disc.

The clamp assembly 6 has a main cylindrical clamping portion 103 and a conical base 104 and a flange 105 at the top. The main clamping portion 103 provides the restraint for the video disc 2 when co-operating with the video disc support ring 86 and the centering device 92. The remainder of the clamp assembly 6 allows ease of operation while ensuring secure restraint of both the clamp assembly 6 and the disc.

A release button 106 has a lip 109 co-operating with a ledge 110 on the portion 103 to define a cylindrical recess containing a compression spring 111 which retains the release button 106 at its uppermost limit of travel. A plunger 113 is urged downwardly by a compression spring 114 acting between a ledge 115 on the plunger 113 and a recess in the button 106.

To secure the clamp assembly 6 to the spindle 77, a number of steel balls 107 are received in an equal number of apertures 108 on the release button 106, and the balls engage an annular groove 120 in the spindle. By this arrangement, the release button 106 is secured to the spindle 77, and the main clamping portion 103 of the clamp assembly is urged into clamping engagement with the disc 2 by the compression spring 111.

To remove the clamp assembly 6 from the spindle 77, two fingers are placed under the flange 105, and the release button 106 is depressed with the thumb. This action pulls the main clamping portion 103 upwardly bringing a widened inside diameter portion 116 of the main portion 103 adjacent the steel balls 107 thereby permitting the balls to move radially outwardly out of the annular groove 120. In this position, the clamp assembly 6 can be axially withdrawn from the spindle 77, and as the clamp assembly is so withdrawn, the plunger 113 moves downwardly within the release button 106 until an outer surface 112 of the plunger 113 engages the balls 107 an retains them within the clamp assembly while it is disengaged from the spindle.

The rim 204 co-operates with the motor mount 72 to define a cavity 205 having an aperture for entry of air, serving to store a volume of air which is available at an annular air exit point 201 between the rims of the ring 86 and the hole in the stabilisation plate 7 to the flat annular space between the top of the stabilisation plate and the underneath of the disc 2. The disc and plate are maintained with critical perpendicularity to the central axis 69.

## Claims

1. An information disc support assembly comprising: a motor (71) and a spindle (77) for driving a disc (2), said spindle (77) having a central axis, a disc support means (86) positioned about said central axis and having a generally flat annular surface (87) extending perpendicular to said central axis and spaced from said spindle for supporting said disc, a central recess (93) provided in said support means; and a centering member (92) mounted on said spindle and received in said central recess provided in said support means, said centering member (92) having an outer surface generally forming a frustum of a cone which is arranged for engaging a central aperture provided in said disc and centering said disc with respect to the central axis of said spindle, and resilient biassing means (91) for enabling the relative axial position of said centering means and said support means to be adjusted, and further comprising a releasable clamping means (6) arranged to engage the side of a disc (2) opposite from the side engaged on said generally flat annular surface (87), characterised in that said disc support means (86) is connected to said spindle (77) to be rotated thereby, in that said generally flat annular surface (87) defines a support plane for said disc which extends at a fixed axial location relative to said central axis, in that said centering member (92) is axially slidable relative to said spindle (77) and to said support means (86), and in that said biassing means (91) are arranged to bias said centering member out of said support means (86) such that, prior to the engagement of a disc on said centering member, said outer surface of said centering member (92) projects beyond said support plane.

2. A support assembly as claimed in Claim 1, characterised in that said annular surface of said support means (86) is formed by an annular ring spaced laterally of said spindle, said central recess (93) being formed between said spindle and said annular ring.

3. The support assembly as claimed in Claim 2, characterised in that a distal end of said spindle extends beyond said centering member, said spindle including a stop member (98) disposed adjacent said distal end of said spindle for limiting movement of said centering member away from support means (86).

**Patentansprüche**

1. Informationsplattenträgeranordnung, enthaltend: einen Motor (71) und eine Spindel (77) zum Antreiben einer Platte (2), wobei die Spindel (77) eine Mittenachse aufweist, eine Plattenträgereinrichtung (36) über der Mittenachse angeordnet ist und eine im wesentlichen flache, ringförmige Oberfläche (87) aufweist, die sich senkrecht zu der genannten Mittenachse erstreckt und von der Spindel einen Abstand hat, um die Platte zu tragen, eine Mittenausnehmung (93) in der Trägereinrichtung; und ein Zentrierelement (92), das an der Spindel befestigt ist und von der Mittenausnehmung in der Trägereinrichtung aufgenommen wird, wobei das Zentrierelement (92) eine Außenfläche aufweist, die im wesentlichen einen Kegelstumpf bildet, der dazu eingerichtet ist, in eine Mittenöffnung einzugreifen, die in der Platte ausgebildet ist une die Platte in bezug auf die Mittenachse der Spindel zentriert, und eine elastische Spanneinrichtung (91), um es zu ermöglichen, die relative axial Position der Zentriereinrichtung und der Trägereinrichtung einzustellen, und weiterhin enthaltend eine lösbare Klemmeinrichtung (6), die dazu eingerichtet ist, die Seite einer Platte (2) gegenüber die Seite, die an der im wesentlichen flachen ringförmigen Fläche (87) anliegt, zu ergreifen, dadurch gekennzeichnet, daß die Plattenträgereinrichtung (86) mit der Spindel (77) verbunden ist, um von dieser gedreht zu werden, daß die im wesentlichen flache, ringförmige Fläche (87) eine Tragebene für die Platte definiert, die sich an einer festen axialen Stelle relativ zu der Mittenachse erstreckt, daß das Zentrierelement (92) axial relative zu de Spindel (77) und der Trägereinrichtung (86) verschiebbar ist, und daß die Spanneinrichtung (91) dazu eingerichtet ist, das Zentrierelement aus der Trägereinrichtung (86) derart herauszudrücken, daß vor dem Auflegen einer Platte auf das Zentrierelement die Außenfläche des Zentrierelements (92) über die Tragebene vorsteht.

2. Trägeranordnung nach Anspruch 1, dadurch gekennzeichnet, daß die ringförmige Fläche an der Trägereinrichtung (86) von einem ringförmigen Ring gebildet wird, der von der Spindel lateral beabstandet ist, wobei die zentrale Ausnehmung (93) zwischen der Spindel und dem genannten ringförmigen Ring ausgebildet ist.

3. Trägeranordnung nach Anspruch 2, dadurch gekennzeichnet, daß ein fernes Ende der Spindel sich über das Zentrierelement hinaus erstreckt, wobei die Spindel ein Anschlagelement (98) aufweist, das benachbart dem fernen Ende der Spindel angeordnet ist, um die Bewegung des Zentrierelementes von der Trägereinrichtung (86) weg zu begrenzen.

**Revendications**

1. Assemblage de support d'une disque de l'information comprenant: un moteur (71) et une broche (77) pour entraîner un disque (2), ladite broche (77) ayant un axe central un moyen (86) de support d'un disque placé autour dudit axe central et ayant une surface annulaire généralement plate (87) s'étendant perpendiculairement audit axe central et espacée de ladite broche pour supporter ledit disque, un évidement central (92) prévu dans ledit moyen de support; et un organe de centrage (92) monté sur ladite broche et reçu dans ledit évidement central prévu dans ledit moyen de support, ledit organe de centrage (92) ayant une surface externe formant généralement un tronc de cône qui est agencé pour engager une ouverture centrale prévue dans ledit disque et centrer ledit disque par rapport à l'axe central de ladite broche, et un moyen élastique de sollicitation (91) pour permettre d'ajuster la position axiale relative dudit moyen de centrage et dudit moyen de support et comprenant de plus un moyen libérable de serrage (6) agencé pour engager la face d'un disque (2) qui est opposée à la face à engager sur ladite surface annulaire généralement plate (87), caractérisé en ce que ledit moyen de support (86) du disque est connecté à ladite broche (77) pour être ainsi entraîné en rotation, en ce que ladite surface annulaire généralement plate (87) définit un plan de support dudit disque qui s'étend à un emplacement axial fixe relativement audit axe central, en ce que ledit organe de centrage (92) est axialement coulissant relativement à ladite broche (77) et audit moyen de support (86) et en ce que lesdits moyens de sollicitation (91) sont agencés pour solliciter ledit organe de centrage hors dudit moyen de support (86) de manière que, avant l'engagement d'un disque sur ledit organe de centrage, ladite surface externe dudit organe de centrage (92) dépasse au-delà dudit plan de support.

2. Assemblage de support selon la revendication 1, caractérisé en ce que ladite surface annulaire dudit moyen de support (86) est formée d'une bague annulaire latéralement espacée de ladite broche, ledit évidement central (93) étant formé entre ladite broche et ladite bague annulaire.

3. Assemblage de support selon la revendication 2, caractérisé en ce qu'une extrémité distale de ladite broche s'étend au-delà dudit organe de centrage, ladite broche ayant une organe d'arrêt (98) disposé adjacent à ladite extrémité distale de ladite broche pour limiter le mouvement dudit organe de centrage au loin dudit moyen de support (86).

FIG. 1.